# EUROPÄISCHE PATENTSCHRIFT

(11) **EP 4 269 139 B1**
(45) Veröffentlichungstag und Bekanntmachung des Hinweises auf die Patenterteilung: **29.07.2026**
(21) Anmeldenummer: 22169709.7
(22) Anmeldetag: 25.04.2022
(51) Int. Cl.: B60H 1/00, B60H 1/32, B61D 27/00

(54) **WASSERSTOFFBETRIEBENEN SCHIENENFAHRZEUG MIT EINER KLIMATISEIRUNGSVORRICHTUNG**
HYDROGEN-POWERED RAILWAY VEHICLE WITH AN AIR CONDITIONING APPARATUS
VÉHICULE FERROVIAIRE FONCTIONNANT À L'HYDROGÈNE AVEC APPAREIL DE CLIMATISATION

(43) Veröffentlichungstag der Anmeldung: 01.11.2023
(73) Patentinhaber: Siemens Mobility GmbH, 80997 München (DE)
(72) Erfinder: REISSNER, Dr. Florian, 90411 Nürnberg (DE); MELTZER, Dr. Katharina, 91058 Erlangen (DE); DANOV, Dr. Vladimir, 91056 Erlangen (DE)
(74) Vertreter: Siemens Patent Attorneys

(56) Entgegenhaltungen:
- EP-A1- 3 690 354
- CN-A- 112 009 349
- DE-B3- 102015 006 944
- DE-U1- 202018 105 554

## Beschreibung

Die Erfindung betrifft ein Schienenfahrzeug gemäß dem Oberbegriff des Patentanspruches 1, ein Verfahren gemäß dem Oberbegriff des Patentanspruches 8.

Schienenfahrzeuge (Züge), die nicht oberleitungsgebunden sind, werden typischerweise mittels eines Dieselmotors angetrieben beziehungsweise versorgt. Hierbei müssen Innenräume des Schienenfahrzeuges ebenfalls beheizt und/oder gekühlt werden.

Die Beheizung erfolgt typischerweise mittels der Abwärme des Dieselmotors im Fahrbetrieb oder durch Zusatzheizungen mit direkter Dieselverbrennung zur Wärmeerzeugung im Stillstand des Schienenfahrzeuges.

Typischerweise erfolgt die Kühlung mittels der Verwendung der durch den Dieselmotor bereitgestellten mechanischen und/oder elektrischen Energie für den Betrieb einer Kältemaschine im Fahrbetrieb oder für den Betrieb von Kältemaschinen, die von kleineren Extraaggregaten während des Stillstands des Schienenfahrzeuges angetrieben werden.

Allerdings ist mit der Verbrennung von Diesel insbesondere eine Kohlenstoffdioxidemission verbunden. Im Hinblick auf die Dekarbonisierung des Verkehrssektors werden somit zu dieselmotorbetriebenen Fahrzeugen alternative Antriebe untersucht. Insbesondere könnten dieselbetriebene Züge durch wasserstoffbetriebene Züge ersetzt werden. Ein bekanntes Beispiel eines wasserstoffbetriebenen Zuges ist der Zug mit dem Handelsnamen Mireo Plus H der Siemens Mobility GmbH. Hierbei wird Wasserstoff in Drucktanks mitgeführt und mittels einer Brennstoffzelle in elektrische Energie umgesetzt. Die bereitgestellte elektrische Energie wird mittels eines Akkumulators gespeichert, welcher den Antriebsmotor des Zuges versorgt. Allerdings soll hierbei möglichst wenig der elektrischen Energie für die Klimatisierung des Zuges verwendet werden, damit die Reichweite des Zuges möglichst nicht reduziert wird.

Die EP 3 690 354 A1 offenbart ein Schienenfahrzeug mit einer Vorrichtung zur Klimatisierung einer Fahrgastkabine des wasserstoffbetriebenen Schienenfahrzeuges, wobei die Vorrichtung einen Drucktank zur Speicherung von Wasserstoff, eine Brennstoffzelle zur Bereitstellung von elektrischer Energie mittels des gespeicherten Wasserstoffes und ein Leitungssystem für den Wasserstoff sowie einen Adsorber und einen Desorber für Wasserstoff umfasst.

Der vorliegenden Erfindung liegt die Aufgabe zugrunde, eine Vorrichtung für eine verbesserte Klimatisierung eines wasserstoffbetriebenen Fahrzeuges, insbesondere für ein wasserstoffbetriebenes Schienenfahrzeug, bereitzustellen.

Die Aufgabe wird durch ein Schienenfahrzeug mit einer Vorrichtung mit den Merkmalen des unabhängigen Patentanspruches 1 und durch ein Verfahren mit den Merkmalen des unabhängigen Patentanspruches 8 gelöst. In den abhängigen Patentansprüchen sind vorteilhafte Ausgestaltungen und Weiterbildungen der Erfindung angegeben.

Das erfindungsgemäße Schienenfahrzeug ist mit einer Vorrichtung zur Klimatisierung einer Fahrgastkabine des wasserstoffbetriebenen Schienenfahrzeuges versehen. Die Vorrichtung umfasst einen Drucktank zur Speicherung von Wasserstoff, eine Brennstoffzelle zur Bereitstellung von elektrischer Energie mittels des gespeicherten Wasserstoffes und ein Leitungssystem für den Wasserstoff sowie einen Adsorber und einen Desorber für Wasserstoff umfasst, wobei das Leitungssystem dazu ausgebildet ist, den Wasserstoff aus dem Drucktank vor seiner Zuführung zur Brennstoffzelle durch den Adsorber und/oder durch den Desorber zu leiten. Die Vorrichtung ist dadurch gekennzeichnet, dass sie einen Puffertank zur Zwischenspeicherung des Wasserstoffes umfasst, wobei der Puffertank bezüglich des Leitungssystems nach dem Adsorber beziehungsweise Desorber und vor der Brennstoffzelle angeordnet ist.

Ein wasserstoffbetriebenes Fahrzeug im Sinne der vorliegenden Erfindung ist ein Fahrzeug, dessen Antrieb wenigstens teilweise, insbesondere vollständig, wasserstoffbasiert ist.

Eine Klimatisierung im Sinne der vorliegenden Erfindung ist eine Beheizung und/oder Kühlung wenigstens einer Fahrgastkabine des Fahrzeuges. Insbesondere wird die Klimatisierung im Stillstand des Fahrzeuges verwendet. Vorgesehen ist dabei die Kühlung eines Innenraumes, nämlich einer Fahrgastkabine eines Schienenfahrzeuges. Die Kühlung kann ergänzend für die Klimatisierung beziehungsweise Temperierung eines Energiespeichers, insbesondere eines oder mehrerer Akkumulatoren, sowie zur Temperierung weiterer Systeme, beispielsweise Wechselrichter und/oder Umrichter, des Fahrzeuges verwendet werden. Hierzu kann das Fahrzeug ein Kühlleitungssystem umfassen.

Die Adsorption mittels des Adsorbers beziehungsweise die Desorption mittels des Desorbers kann als eine physikalische Adsorption (Physisorption) und/oder als eine chemischen Adsorption (Chemisorption) erfolgen. Mit anderen Worten wird vorliegend unter Adsorption beziehungsweise Desorption eine Physisorption und/oder eine Chemisorption verstanden. Bevorzugt erfolgt lediglich eine Physisorption.

Gemäß der vorliegenden Erfindung ist die Vorrichtung dazu ausgebildet, den Wasserstoff vor seiner Verwendung in der Brennstoffstelle über den Adsorber und/oder Desorber zu führen. Hierbei sind der Adsorber und der Desorber bezüglich des Leitungssystem parallel verschaltet. Mit anderen Worten wird gemäß der vorliegenden Erfindung der Wasserstoff vor seiner Verwendung in der Brennstoffzelle durch den Adsorber und/oder durch den Desorber geführt beziehungsweise geleitet.

Durch den erfindungsgemäß vorgesehenen Adsorber und/oder Desorber wird ein Teil der Druckenergie des im Drucktank gespeicherten Wasserstoffes verwendet, um mittels des Adsorbers Wärme und/oder mittels des Desorbers Kälte bereitzustellen. Hierbei wird der Wasserstoff unter wenigstens teilweiser Aufwendung der Druckenergie innerhalb des Adsorbers wenigstens teilweise adsorbiert (Adsorption). Hierbei wird Wärme freigesetzt, die für die Beheizung des Fahrzeuges verwendet werden kann. Bei niedrigerem Druck kann hingegen Wärme aufgewendet werden, um den Wasserstoff innerhalb des Desorber zu desorbieren (Desorption). Unter dieser Aufnahme von Wärme wird somit Kälte erzeugt, die für die Kühlung des Fahrzeuges verwendet werden kann.

Durch die vorliegende Erfindung kann somit wenigstens ein Teil der Druckenergie aus dem Drucktank des Fahrzeuges vor seiner Expansion auf das für die Brennstoffstelle typischerweise deutlich niedrigere Druckniveau zur Klimatisierung des Fahrzeuges verwendet und somit wenigstens teilweise zurückgewonnen werden. Dadurch wird vorteilhafterweise die energetische Effizienz eines erfindungsgemäßen Fahrzeuges verbessert. Insbesondere wird durch die Erfindung die Reichweite von wasserstoffbetrieben Schienenfahrzeugen erhöht.

Ein wesentlicher Vorteil der vorliegenden Erfindung ist, dass die Druckenergie des Wasserstoffes in den Drucktanks teilweise für die Klimatisierung, das heißt für die Kühlung und/oder Beheizung, vor der Expansion des Wasserstoffes auf das Druckniveau der Brennstoffzelle (Betriebsdruck der Brennstoffzelle) genutzt wird, statt diese Druckenergie - wie im Stand der Technik - in einer isenthalpen Expansion zu dissipieren.

Somit wird insbesondere die Kühlung einer Fahrgastkabine mittels konventioneller Kältemaschine teilweise durch eine erfindungsgemäße Kühlung mittels Desorption des Wasserstoffes im Desorber ersetzbar. Dadurch wird insbesondere die Reichweite eines Schienenfahrzeuges entsprechend der Erfindung erhöht.

Zudem sind Kühlung und/oder Heizung bei Stillstand der Brennstoffzelle und ohne Verbrauch elektrischer oder stofflicher Energie möglich. Hierbei kann die Klimatisierung vorteilhafterweise zeitlich unabhängig vom Fahrbetrieb beziehungsweise vom Betrieb der Brennstoffzelle erfolgen, das heißt ein gleichzeitiger Betrieb der Klimatisierung mittels Adsorption und/oder Desorption und der Brennstoffzelle ist nicht erforderlich. Ein gleichzeitiger Betrieb kann jedoch vorgesehen sein. Durch die Ausbildung der Klimatisierung mittels Adsorption/Desorption kann ebenfalls bei einem Nicht-Betrieb der Brennstoffzelle Kälte und/oder Wärme bereitgestellt werden. Je nach Dauer des Stillstandes des Fahrzeuges beziehungsweise der Brennstoffzelle und der daraus resultierenden erforderlichen thermischen Energiemengen, beispielsweise für die Klimatisierung einer Fahrgastkabine während eines Stillstands des Fahrzeuges, wird vorteilhafterweise ein zusätzlicher Puffertank für den Wasserstoff auf Niederdruckniveau beziehungsweise auf dem Druckniveau des Betriebsdruckes der Brennstoffzelle verwendet.

Die Erfindung ermöglicht somit durch den Adsorber und den Desorber die vorteilhafte teilweise Nutzung der Druckenergie des Wasserstoffes zur Kühlung und/oder Beheizung des Schienenfahrzeuges.

Das erfindungsgemäße Verfahren ist zur Klimatisierung eines erfindungsgemäßen, wasserstoffbetriebenen Schienenfahrzeuges ausgestaltet, wobei zur Beheizung einer Fahrgastkabine des Schienenfahrzeuges der Wasserstoff über den Adsorber zur Brennstoffzelle geleitet wird, und zur Kühlung der Fahrgastkabine der Wasserstoff über den Desorber zur Brennstoffzelle geleitet wird. Das Verfahren ist dadurch gekennzeichnet, dass der Wasserstoff nach dem Adsorber oder nach dem Desorber und vor seiner Leitung in die Brennstoffzelle mittels eines Puffertanks zwischengespeichert wird.

Durch die Leitung des Wasserstoffes über den Adsorber wird auf hohem Druckniveau, beispielsweise im Bereich von 30 bar bis 100 bar, der Wasserstoff innerhalb des Adsorbers teilweise adsorbiert, wobei dadurch Wärme frei wird, die für die Beheizung wenigstens teilweise verwendet wird. Durch die Leistung des Wasserstoffes über den Desorber wird auf niedrigem Druckniveau, beispielsweise im Bereich von 5 bis 30 bar, der Wasserstoff innerhalb des Desorbers teilweise desorbiert, wobei dadurch Kälte frei wird, die für die Kühlung wenigstens teilweise verwendet wird. Hierbei wird Kälte in dem Sinne frei beziehungsweise erzeugt, das für Desorption des Wasserstoffes Wärme erforderlich ist, die der Fahrgastkabine entzogen wird. Dadurch wird die Fahrgastkabine gekühlt. Anschließend wird der Wasserstoff zur Brennstoffzelle, beispielsweise für den Antrieb des Fahrzeuges, geleitet, wobei hierbei ebenfalls eine Zwischenspeicherung vor der Brennstoffzelle mittels eines Puffertanks vorgesehen ist. Das Leiten des Wasserstoffes nach dem Adsorber und/oder nach dem Desorber zur Brennstoffzelle muss somit nicht unmittelbar durchgeführt werden.

Es ergeben sich zum erfindungsgemäßen Schienenfahrzeug gleichwertige und gleichwirkende Vorteile und/oder Ausgestaltungen des erfindungsgemäßen Verfahrens.

Gemäß einer vorteilhaften Ausgestaltung der Erfindung umfasst das Leitungssystem wenigstens ein Dreiwegeventil, mittels welchem der Wasserstoff schaltbar zum Adsorber und/oder zum Desorber leitbar ist.

Vorteilhafterweise kann durch das schaltbare Dreiwegeventil der Wasserstoff zum Adsorber oder zum Desorber oder parallel zum Adsorber und dem Desorber geleitet werden. Dadurch kann vorteilhafterweise Wärme zur Beheizung und/oder Kälte (durch Wärmeaufnahme) zur Kühlung des Fahrzeuges, insbesondere eines Innenraumes des Fahrzeuges, bereitgestellt werden.

Hierbei ist es besonders bevorzugt, wenn die Vorrichtung eine Steuereinheit umfasst, wobei die Steuereinheit dazu ausgebildet ist, wenigstens das Dreiwegeventil zu schalten.

In einer vorteilhaften Weiterbildung der Erfindung ist die Steuereinheit dazu ausgebildet, für eine Beheizung eines Innenraumes und/oder einer Komponente des Fahrzeuges, das Dreiwegeventil derart zu schalten, dass der Wasserstoff zum Adsorber geleitet wird.

Dadurch wird der Wasserstoff unter wenigstens teilweiser Aufwendung seiner Druckenergie innerhalb des Adsorbers wenigstens teilweise adsorbiert, wobei hierbei Wärme frei wird. Die durch die Adsorption freigewordene Wärme wird dann zur Beheizung des Fahrzeuges verwendet.

Gemäß einer vorteilhaften Ausgestaltung der Erfindung ist die Steuereinheit dazu ausgebildet, für eine Kühlung eines Innenraumes und/oder einer Komponente des Fahrzeuges, das Dreiwegeventil derart zu schalten, dass der Wasserstoff zum Desorber geleitet wird.

Dadurch wird der Wasserstoff innerhalb des Desorbers bei niedrigerem Druck als im Adsorber wenigstens teilweise desorbiert, wobei hierbei Wärme erforderlich ist. Die für die Desorption erforderliche Wärme wird dem Innenraum des Fahrzeuges beziehungsweise der Komponente des Fahrzeuges entzogen. Mit anderen Worten wird dadurch in diesem Sinne Kälte erzeugt und somit eine Kühlung des Innenraumes beziehungsweise der Komponente bereitgestellt.

In einer vorteilhaften Weiterbildung der Erfindung ist der Adsorber mittels eines ersten Behälters und der Desorber mittels eines zweiten Behälters ausgebildet, wobei die Behälter jeweils ein Adsorbermaterial zur Adsorption beziehungsweise Desorption des Wasserstoffes umfassen.

Durch die zwei Behälter ist vorteilhafterweise ein wechselseitiger und somit kontinuierlicher Betrieb möglich. Die Adsorption und Desorption können somit wechselseitig innerhalb der zwei Behälter erfolgen. Die Behälter können wiederum mehrere Teilbehälter umfassen.

Weiterhin kann vorteilhafterweise durch ein jeweiliges Festlegen des verwendeten Adsorbermaterials innerhalb des Adsorbers beziehungsweise Desorbers und dem damit verbundenen Druckniveau der Adsorption und der Desorption die Temperatur für die Wärmeaufnahme und die Wärmeabgabe eingestellt werden. Typischerweise ist das Druckniveau des Wasserstoffes innerhalb des Adsorbers größer als innerhalb des Desorbers. Der Wasserstoff wird somit unter hohem Druck im Adsorber adsorbiert, wobei hier erfindungsgemäß die Druckenergie des im Drucktank gespeicherten Wasserstoffes verwendet wird, und unter niedrigerem Druck, beispielsweise 10 bar, innerhalb des Desorbers desorbiert. Durch die Adsorption wird Wärme erzeugt beziehungsweise bereitgestellt und durch die Desorption wird Kälte erzeugt beziehungsweise bereitgestellt.

Gemäß einer vorteilhaften Ausgestaltung der Erfindung umfasst das Adsorbermaterial einen Feststoff, insbesondere ein Metallhydrid.

Hierbei können der Adsorber zur Adsorption und der Desorber zur Desorption des Wasserstoffes verschiedene Materialien aufweisen. Weiterhin kann das Adsorbermaterial innerhalb des Adsorbers zur Adsorption sowie das Adsorbermaterial innerhalb des Desorbers dasselbe Material sein. Besonders vorteilhaft ist das Adsorbermaterial innerhalb des Adsorbers und/oder Desorbers als Feststoff ausgebildet, der ein oder mehrere Metallhydride umfasst. Das Temperaturniveau der Wärme zur Beheizung und/oder der Kälte zur Kühlung kann vorteilhafterweise durch Verwendung entsprechender Materialien und das jeweilige Druckniveau eingestellt werden. Insbesondere erfolgt bei einer Verwendung von Metallhydriden als Feststoff wenigstens teilweise eine chemische Reaktion, das heißt eine chemische Adsorption/Desorption.

Die Vorrichtung des Schienenfahrzeugs umfasst einen Puffertank zur Zwischenspeicherung des Wasserstoffes, wobei der Puffertank bezüglich des Leitungssystems nach dem Adsorber beziehungsweise Desorber und vor der Brennstoffzelle angeordnet ist.

Mit anderen Worten wird der Wasserstoff nach dem Adsorber und/oder nach dem Desorber und vor seiner Leitung in die Brennstoffzelle mittels eines Puffertanks vorteilhafterweise zwischengespeichert.

Durch den Puffertank und seine Anordnung wird vorteilhafterweise ein von der Brennstoffzelle zeitlich unabhängiger Betrieb der Klimatisierung ermöglicht. Der Wasserstoff wird nach seiner Verwendung zur Klimatisierung innerhalb des Puffertanks, bei einem niedrigen Druck, beispielsweise 10 bar, für seine spätere Verwendung in der Brennstoffzelle, zwischengespeichert.

Gemäß einer vorteilhaften Ausgestaltung der Erfindung wird der Wasserstoff innerhalb des Drucktanks bei einem Druck im Bereich von 300 bar bis 400 bar, insbesondere bei 350 bar, gespeichert.

Dadurch wird vorteilhafterweise eine bevorzugte Speicherung des Wasserstoffes bereitgestellt.

In einer vorteilhaften Weiterbildung der Erfindung wird der Wasserstoff mit einem Druck im Bereich von 30 bar bis 100 bar dem Adsorber und/oder Desorber zugeführt.

Hierbei weist der Wasserstoff vorteilhafterweise noch ausreichend Druckenergie für seine Adsorption im Adsorber aus. Das genannte vorteilhafte Druckniveau im Bereich von 30 bis 100 bar kann durch einen Druckminderer erreicht werden. Mittels des Druckminderers kann der Druck des Wasserstoffes innerhalb des Drucktanks von 300 bar bis 400 bar (Hochdruck) auf einen Druck im Bereich von 30 bar bis 100 bar (Mitteldruck) gemindert beziehungsweise reduziert werden. Der Druckminderer ist insbesondere als Expansionsventil ausgebildet.

Gemäß einer vorteilhaften Ausgestaltung der Erfindung wird der Wasserstoff mit einem Druck im Bereich von 5 bar bis 15 bar (Niederdruck), insbesondere mit 10 bar, innerhalb des Puffertanks zwischengespeichert.

Dadurch wird vorteilhafterweise der Wasserstoff innerhalb des Drucktanks im Bereich des Betriebsdruckes der Brennstoffzelle zwischengespeichert. Zudem sind die technischen Anforderungen an den Puffertank aufgrund des reduzierten Druckniveaus geringer als an den Drucktank. Typischerweise weist die Brennstoffzelle einen Betriebsdruck von etwa 10 bar auf. Der Wasserstoff kann somit vorteilhafterweise ohne weitere Druckminderung der Brennstoffzelle direkt zugeführt werden. Alternativ oder ergänzend kann eine weitere Druckminderung mittels eines Druckminderers vor der Brennstoffzelle vorgesehen sein.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: eine Vorrichtung gemäß dem Stand der Technik; und
- Figur 2: eine Vorrichtung gemäß einer Ausgestaltung der vorliegenden Erfindung.

Gleichartige, gleichwertige oder gleichwirkende Elemente können in einer der Figuren oder in den Figuren mit denselben Bezugszeichen versehen sein.

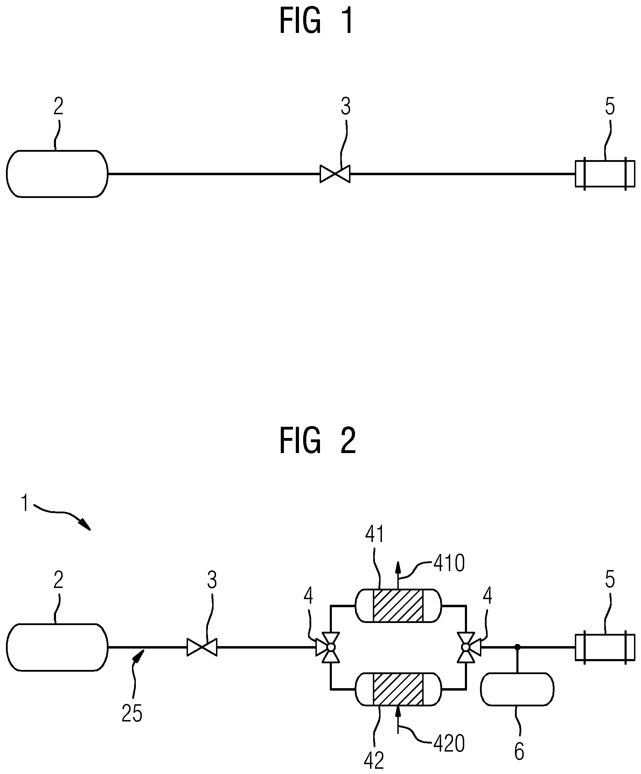

Die Figur 1 veranschaulicht schematisch eine Vorrichtung für ein wasserstoffbetriebenes Fahrzeug gemäß dem Stand der Technik.

Die Vorrichtung umfasst einen Drucktank 2, einen Druckminderer 3 (Expansionsventil) sowie eine Brennstoffzelle 5. Die durch die Brennstoffzelle 5 unter Verbrauch des Wasserstoffes erzeugte elektrische Energie wird für den Antrieb des Fahrzeuges verwendet. Hierbei kann lediglich eine Beheizung des Fahrzeuges durch die Vorrichtung mittels der Abwärme der Brennstoffzelle 5 erfolgen. Eine Kühlung ist mit der bekannten, dargestellten Vorrichtung nicht möglich, sondern muss beispielsweise über weitere bekannte elektrisch betriebene Kältemaschinen erfolgen.

Der Wasserstoff wird typischerweise bei einem hohen Druck mittels des Drucktankes 2 gespeichert. Für seine Verwendung in der Brennstoffzelle 5 wird dieser mittels eines Leitungssystems vom Drucktank 2 über das Expansionsventil 3 zur Brennstoffzelle 5 geleitet. Das Expansionsventil 3 ist hierbei erforderlich, da der Betriebsdruck der Brennstoffzelle deutlich geringer als der Speicherdruck des Wasserstoffes innerhalb des Drucktankes 2 ist. Hierbei geht nach dem Stand der Technik die Druckenergie des Wassersstoffes bei seiner Expansion verloren und wird nicht weiter genutzt. Mit anderen Worten wird die Druckenergie nach dem Stand der Technik dissipiert.

Die Figur 2 veranschaulicht eine Vorrichtung 1 gemäß einer Ausgestaltung der vorliegenden Erfindung.

Ein nicht dargestelltes wasserstoffbetriebenes Schienenfahrzeug, insbesondere ein Zug, gemäß einer Ausgestaltung der vorliegenden Erfindung, umfasst die Vorrichtung 1.

Die Vorrichtung 1 umfasst einen Drucktank 2, ein Expansionsventil 3 sowie eine Brennstoffzelle 5. Weiterhin umfasst die Vorrichtung 1 zwei Dreiwegeventile 4, einen Adsorber 41, einen Desorber 42 sowie einen Puffertank 6. Die genannten Komponenten der Vorrichtung 1 sind über ein Leitungssystem 25 für Wasserstoff miteinander fluidisch verbunden.

Mittels des Drucktanks 2 wird Wasserstoff gespeichert. Besonders bevorzugt erfolgt die Speicherung bei einem Druck beziehungsweise einem Speicherdruck von 350 bar. Mittels des Expansionsventils 3 wird der Druck des gespeicherten Wasserstoffes gemindert, bevorzugt auf einen Druck im Bereich von 30 bis 100 bar. Der Wasserstoff wird somit bei Hochdruck gespeichert und anschließend mittels des Expansionsventils 3 auf einen Mitteldruck reduziert. Dieser Mitteldruck ist noch höher als der Betriebsdruck (Niederdruck) der Brennstoffzelle 5. Der Betriebsdruck der Brennstoffzelle 5 ist beispielsweise 10 bar.

Nach seiner Expansion mittels des Expansionsventils 3 wird der Wasserstoff über eines der Dreiwegeventile 4 zum Adsorber 41 und/oder zum Desorber 42 geleitet.

Innerhalb des Adsorbers 41 erfolgt unter einem höheren Druck, beispielsweise im Bereich von 30 bis 100 bar, eine wenigstens teilweise Adsorption des Wasserstoffes. Beispielsweise durch ein Adsorptionsmaterial, welches insbesondere ein Metallhydrid umfasst. Zur Adsorption wird die Druckenergie des Wasserstoffes nach dem Expansionsventil 3 wenigstens teilweise verwendet. Durch die Adsorption wird Wärme frei (symbolisiert durch den Pfeil 410; Heizung), die für ein Beheizen eines Innenraumes und/oder einer Komponente eines wasserstoffbetriebenen Fahrzeuges, insbesondere eines Schienenfahrzeuges, welches die Vorrichtung 1 umfasst, verwendet werden kann. Besonders bevorzugt ist das Fahrzeug ein Schienenfahrzeug und der beheizte Innenraum eine Fahrgastkabine. Da der Druck im Adsorber 41 noch höher ist als der Betriebsdruck der Brennstoffzelle 5, wird, im Gegensatz zum Stand der Technik, die Druckenergie wenigstens teilweise genutzt, nämlich insbesondere für das Beheizen des Innenraumes. Die Druckenergie wird somit wenigstens teilweise zur Adsorption des Wasserstoffes und somit zur Wärmeerzeugung genutzt. Durch die Adsorption des Wasserstoffes wird beispielsweise sein Druck vom Bereich 30 bis 100 bar auf einen Druck von 10 bar reduziert.

Innerhalb des Desorbers 42 wird Wasserstoff desorbiert. Hierzu muss bei niedrigem Druck Wärme zugeführt werden. Diese Wärme wird besonders bevorzugt wenigstens teilweise durch die Wärme einer Fahrgastkabine, beispielsweise im Sommer, eines Schienenfahrzeuges bereitgestellt. Dadurch erfolgt vorteilhafterweise eine Kühlung des Innenraumes beziehungsweise der Komponente des Fahrzeuges, das heißt insbesondere der Fahrgastkabine. Die Wärmezufuhr zur Desorption des Wasserstoffes innerhalb des Desorbers 42 ist durch den Pfeil 420 gekennzeichnet (Kühlung). Weiterhin kann die genannte Wärme durch eine Batterie beziehungsweise einen Akkumulator, der zur Speicherung der elektrischen Energie der Brennstoffzelle 5 vorgesehen ist, bereitgestellt werden. Somit kann die Batterie beziehungsweise der Akkumulator alternativ oder ergänzend zum Innenraum gekühlt werden.

Die Wärmeabgabe 410 und/oder die Wärmezufuhr 420 können jeweils durch Wärmetauscher und ein entsprechendes Leitungssystem für Luft, Wasser und/oder einem weiteren Kühlmedium, beispielsweise Propan oder einem Fluorketon, erfolgen.

Nach dem Adsorber 41 beziehungsweise nach dem Desorber 42 wird der Wasserstoff über das Leitungssystem 25 und mittels dem weiteren der Dreiwegeventile 4 wieder zu einem Massenstrom zusammengeführt und direkt zur Brennstoffzelle 5 oder zur Zwischenspeicherung zum Puffertank 6 geleitet. Mittels des Puffertanks 6 wird der Betrieb der Klimatisierung von dem Betrieb der Brennstoffzelle 5 zeitlich entkoppelt. Dies ist besonders für Schienenfahrzeuge beziehungsweise Züge von Vorteil, da dadurch die Klimatisierung zeitlich unabhängig vom Fahrtbetrieb erfolgen kann. Anschließend wird der Wasserstoff aus dem Puffertank 6 und/oder direkt nach dem Adsorber 41 und/oder Desorber 42 in der Brennstoffzelle 5 zu elektrischer Energie umgesetzt, die insbesondere für den Fahrtbetrieb des Fahrzeuges, welches die Vorrichtung 1 umfasst, wenigstens teilweise verwendet wird. Weiterhin kann die Abwärme der Brennstoffzelle 5 zusätzlich als Heizung verwendet werden.

Der Adsorber 41 und der Desorber 42 sind bezüglich des Massenstromes des Wasserstoffes beziehungsweise innerhalb des Leistungssystems 25 parallel verschaltet. Diese parallele Verschaltung wird durch die zwei Dreiwegeventile 4 ermöglicht. Dadurch kann der Wasserstoff durch den Adsorber und/oder Desorber geleitet werden. Die Dreiwegeventile 4 sind durch eine nicht dargestellte Steuereinheit der Vorrichtung beziehungsweise des Fahrzeuges schaltbar beziehungsweise steuerbar.

Obwohl die Erfindung im Detail durch die bevorzugten Ausführungsbeispiele näher illustriert und beschrieben wurde, so ist die Erfindung nicht durch die offenbarten Beispiele eingeschränkt.

### Bezugszeichenliste

- 1: Vorrichtung
- 2: Drucktank
- 3: Expansionsventil
- 4: Dreiwegeventil
- 5: Brennstoffzelle
- 6: Puffertank
- 25: Leitungssystem
- 41: Adsorber
- 42: Desorber
- 410: Heizung
- 420: Kühlung

## Patentansprüche

1. Schienenfahrzeug mit einer Vorrichtung (1) zur Klimatisierung einer Fahrgastkabine des wasserstoffbetriebenen Schienenfahrzeuges, wobei die Vorrichtung (1) einen Drucktank (2) zur Speicherung von Wasserstoff, eine Brennstoffzelle (5) zur Bereitstellung von elektrischer Energie mittels des gespeicherten Wasserstoffes und ein Leitungssystem (25) für den Wasserstoff sowie einen Adsorber (41) und einen Desorber (42) für Wasserstoff umfasst, wobei das Leitungssystem (25) dazu ausgebildet ist, den Wasserstoff aus dem Drucktank (2) vor seiner Zuführung zur Brennstoffzelle (5) durch den Adsorber (41) und/oder durch den Desorber (42) zu leiten, **dadurch gekennzeichnet, dass** die Vorrichtung (1) einen Puffertank (6) zur Zwischenspeicherung des Wasserstoffes umfasst, wobei der Puffertank (6) bezüglich des Leitungssystems (25) nach dem Adsorber (41) beziehungsweise Desorber (42) und vor der Brennstoffzelle (5) angeordnet ist.

2. Schienenfahrzeug gemäß Anspruch 1, **dadurch gekennzeichnet, dass** das Leitungssystem (25) wenigstens ein Dreiwegeventil (4) umfasst, mittels welchem der Wasserstoff schaltbar zum Adsorber (41) und/oder zum Desorber (42) leitbar ist.

3. Schienenfahrzeug gemäß Anspruch 2, **dadurch gekennzeichnet, dass** die Vorrichtung (1) eine Steuereinheit umfasst, wobei die Steuereinheit dazu ausgebildet ist, wenigstens das Dreiwegeventil (4) zu schalten.

4. Schienenfahrzeug gemäß Anspruch 3, **dadurch gekennzeichnet, dass** die Steuereinheit dazu ausgebildet ist, für eine Beheizung der Fahrgastkabine, das Dreiwegeventil (4) derart zu schalten, dass der Wasserstoff zum Adsorber (41) geleitet wird.

5. Schienenfahrzeug gemäß Anspruch 3 oder 4, **dadurch gekennzeichnet, dass** die Steuereinheit dazu ausgebildet ist, für eine Kühlung der Fahrgastkabine, das Dreiwegeventil (4) derart zu schalten, dass der Wasserstoff zum Desorber (42) geleitet wird.

6. Schienenfahrzeug gemäß einem der vorhergehenden Ansprüche, **dadurch gekennzeichnet, dass** der Adsorber (41) mittels eines ersten Behälters und der Desorber (42) mittels eines zweiten Behälters ausgebildet ist, wobei die Behälter jeweils ein Adsorbermaterial zur Adsorption beziehungsweise Desorption des Wasserstoffes umfassen.

7. Schienenfahrzeug gemäß Anspruch 6, **dadurch gekennzeichnet, dass** das Adsorbermaterial einen Feststoff, insbesondere Metallhydride, umfasst.

8. Verfahren zur Klimatisierung eines wasserstoffbetriebenen Schienenfahrzeuges gemäß einem der vorhergehenden Ansprüche, wobei zur Beheizung einer Fahrgastkabine des Schienenfahrzeuges der Wasserstoff über den Adsorber (41) zur Brennstoffzelle (5) geleitet wird, und zur Kühlung der Fahrgastkabine der Wasserstoff über den Desorber (42) zur Brennstoffzelle (5) geleitet wird, **gekennzeichnet dadurch, dass** der Wasserstoff nach dem Adsorber (41) oder nach dem Desorber (42) und vor seiner Leitung in die Brennstoffzelle (5) mittels eines Puffertanks (6) zwischengespeichert wird.

9. Verfahren gemäß Anspruch 8, **gekennzeichnet dadurch, dass** der Wasserstoff innerhalb des Drucktanks (2) bei einem Druck im Bereich von 300 bar bis 400 bar, insbesondere bei 350 bar, gespeichert wird.

10. Verfahren gemäß einem der Ansprüche 8 bis 9, **gekennzeichnet dadurch, dass** der Wasserstoff mit einem Druck im Bereich von 30 bar bis 100 bar dem Adsorber (41) und/oder Desorber (42) zugeführt wird.

11. Verfahren gemäß einem der Ansprüche 8 bis 10, **gekennzeichnet dadurch, dass** der Wasserstoff mit einem Druck im Bereich von 5 bar bis 15 bar, insbesondere mit 10 bar, innerhalb des Puffertanks (6) zwischengespeichert wird.

## Claims

1. Rail vehicle having a device (1) for air-conditioning a passenger cabin of the hydrogen-powered rail vehicle, wherein the device (1) comprises a pressure tank (2) for storing hydrogen, a fuel cell (5) for providing electrical energy by means of the stored hydrogen, and a line system (25) for the hydrogen, and also an adsorber (41) and a desorber (42) for hydrogen, wherein the line system (25) is designed to conduct the hydrogen from the pressure tank (2) through the adsorber (41) and/or through the desorber (42) before it is fed to the fuel cell (5), **characterized in that** the device (1) comprises a buffer tank (6) for buffer storage of the hydrogen, wherein the buffer tank (6) is arranged downstream of the adsorber (41) or desorber (42) and upstream of the fuel cell (5) with respect to the line system (25).

2. Rail vehicle according to Claim 1, **characterized in that** the line system (25) comprises at least one three-way valve (4), by means of which the hydrogen can be conducted switchably to the adsorber (41) and/or to the desorber (42).

3. Rail vehicle according to Claim 2, **characterized in that** the device (1) comprises a control unit, wherein the control unit is designed to switch at least the three-way valve (4).

4. Rail vehicle according to Claim 3, **characterized in that** the control unit is designed to switch the three-way valve (4) for heating the passenger cabin in such a way that the hydrogen is conducted to the adsorber (41).

5. Rail vehicle according to Claim 3 or 4, **characterized in that** the control unit is designed to switch the three-way valve (4) for cooling the passenger cabin in such a way that the hydrogen is conducted to the desorber (42).

6. Rail vehicle according to one of the preceding claims, **characterized in that** the adsorber (41) is formed by means of a first container and the desorber (42) is formed by means of a second container, wherein the containers each comprise an adsorber material for adsorption or desorption of the hydrogen.

7. Rail vehicle according to Claim 6, **characterized in that** the adsorber material comprises a solid, in particular metal hydrides.

8. Method for air-conditioning a hydrogen-powered rail vehicle according to one of the preceding claims, wherein, for heating a passenger cabin of the rail vehicle, the hydrogen is conducted to the fuel cell (5) via the adsorber (41), and, for cooling the passenger cabin, the hydrogen is conducted to the fuel cell (5) via the desorber (42), **characterized in that** the hydrogen is buffer-stored by means of a buffer tank (6) downstream of the adsorber (41) or downstream of the desorber (42) and before it is conducted into the fuel cell (5).

9. Method according to Claim 8, **characterized in that** the hydrogen is stored within the pressure tank (2) at a pressure in the range from 300 bar to 400 bar, in particular at 350 bar.

10. Method according to either of Claims 8 or 9, **characterized in that** the hydrogen is fed to the adsorber (41) and/or desorber (42) at a pressure in the range from 30 bar to 100 bar.

11. Method according to one of Claims 8 to 10, **characterized in that** the hydrogen is buffer-stored within the buffer tank (6) at a pressure in the range from 5 bar to 15 bar, in particular at 10 bar.

## Revendications

1. Véhicule ferroviaire équipé d'un dispositif (1) pour climatiser une cabine de passagers du véhicule ferroviaire à hydrogène, le dispositif (1) comprenant un réservoir sous pression (2) pour stocker de l'hydrogène, une pile à combustible (5) pour fournir de l'énergie électrique à partir de l'hydrogène stocké et un système de conduction (25) pour l'hydrogène ainsi qu'un adsorbeur (41) et un désorbeur (42) pour l'hydrogène, le système de conduction (25) étant conçu pour acheminer l'hydrogène du réservoir sous pression (2) à travers l'adsorbeur (41) et/ou à travers le désorbeur (42) avant son acheminement vers la pile à combustible (5), **caractérisé en ce que** le dispositif (1) comprend un réservoir tampon (6) pour stocker temporairement l'hydrogène, le réservoir tampon (6) étant agencé, par rapport au système de conduction (25), après l'adsorbeur (41) ou le désorbeur (42) et avant la pile à combustible (5).

2. Véhicule ferroviaire selon la revendication 1, **caractérisé en ce que** le système de conduction (25) comprend au moins une vanne à trois voies (4), au moyen de laquelle l'hydrogène peut être acheminé de manière commutable vers l'adsorbeur (41) et/ou vers le désorbeur (42).

3. Véhicule ferroviaire selon la revendication 2, **caractérisé en ce que** le dispositif (1) comprend une unité de commande, l'unité de commande étant conçue pour commuter au moins la vanne à trois voies (4).

4. Véhicule ferroviaire selon la revendication 3, **caractérisé en ce que** l'unité de commande est conçue pour commuter, pour le réchauffement de la cabine de passagers, la vanne à trois voies (4) de manière à ce que l'hydrogène soit acheminé vers l'adsorbeur (41).

5. Véhicule ferroviaire selon la revendication 3 ou 4, **caractérisé en ce que** l'unité de commande est conçue pour commuter, pour le refroidissement de la cabine de passagers, la vanne à trois voies (4) de manière à ce que l'hydrogène soit acheminé vers le désorbeur (42).

6. Véhicule ferroviaire selon l'une des revendications précédentes, **caractérisé en ce que** l'adsorbeur (41) est formé au moyen d'un premier conteneur et le désorbeur (42) est formé au moyen d'un deuxième conteneur, les conteneurs comprenant chacun un matériau adsorbeur pour l'adsorption, respectivement la désorption de l'hydrogène.

7. Véhicule ferroviaire selon la revendication 6, **caractérisé en ce que** le matériau adsorbeur comprend un solide, notamment des hydrures métalliques.

8. Procédé de climatisation d'un véhicule ferroviaire à hydrogène selon l'une des revendications précédentes, dans lequel pour chauffer une cabine de passagers du véhicule ferroviaire, l'hydrogène est acheminé via l'adsorbeur (41) vers la pile à combustible (5), et pour refroidir la cabine de passagers, l'hydrogène est acheminé via le désorbeur (42) vers la pile à combustible (5), **caractérisé en ce que** l'hydrogène est stocké temporairement au moyen d'un réservoir tampon (6) après l'adsorbeur (41) ou après le désorbeur (42) et avant son acheminement vers la pile à combustible (5).

9. Procédé selon la revendication 8, **caractérisé en ce que** l'hydrogène est stocké dans le réservoir sous pression (2) à une pression comprise entre 300 bars et 400 bars, en particulier à 350 bars.

10. Procédé selon l'une quelconque des revendications 8 à 9, **caractérisé en ce que** l'hydrogène est amené à l'adsorbeur (41) et/ou au désorbeur (42) à une pression comprise entre 30 bars et 100 bars.

11. Procédé selon l'une quelconque des revendications 8 à 10, **caractérisé en ce que** l'hydrogène est stocké temporairement dans le réservoir tampon (6) à une pression comprise entre 5 bars et 15 bars, en particulier à 10 bars.
